# EUROPEAN PATENT SPECIFICATION

(11) **EP 3 321 155 B1**
(45) Date of publication and mention of the grant of the patent: **12.06.2019**
(21) Application number: 17200639.7
(22) Date of filing: 08.11.2017
(51) Int. Cl.: B62J 6/02, B62K 21/02, B62J 17/02, B62K 11/04, B60Q 1/00, B60Q 1/04, B60Q 1/28, F21S 41/147

(54) **SCOOTER**
ROLLER
SCOOTER

(30) Priority: 09.11.2016 JP 2016219065
(43) Date of publication of application: 16.05.2018
(73) Proprietor: Yamaha Hatsudoki Kabushiki Kaisha, Iwata-shi Shizuoka 438-8501 (JP)
(72) Inventor: FUJIWARA, Yu, Iwata-shi, Shizuoka 438-8501 (JP); TEZUKA, Hiroyuki, Iwata-shi, Shizuoka 438-8501 (JP)
(74) Representative: Grünecker Patent- und Rechtsanwälte PartG mbB

(56) References cited:
- EP-A1- 2 987 709
- EP-A2- 2 669 116
- DE-A1-102007 013 309
- US-A1- 2005 134 114
- US-A1- 2015 124 467
- US-A1- 2016 185 409

## Description

The present invention relates to a scooter according to the preamble of independent claim 1. Such a scooter can be taken from the prior art document US 2005/134114 A1.

JP H11314589 A discloses a scooter that includes a scooter-type front fork. The scooter-type front fork includes a right-and-left pair of fork pipes, an under bracket connected to an upper end portion of the pair of fork pipes, and a steering shaft that extends upward from the under bracket. The steering shaft is inserted in a head pipe of a frame. The front fork is turnable rightward and leftward with respect to the head pipe.

There is a case in which a motorcycle-type front fork (hereinafter, referred to as an "MC-type front fork" if necessary), not the scooter-type front fork, is employed in a motorcycle. The MC-type front fork has the advantage of having a higher rigidity than the scooter-type front fork, whereas the MC-type front fork has the disadvantage of having a larger upper portion than the scooter-type front fork.

In detail, the MC-type front fork includes a right-and-left pair of fork pipes, a top bracket connected to an upper end portion of the pair of fork pipes, an under bracket that is disposed at a lower position than the top bracket and that is connected to the pair of fork pipes, and a steering shaft that extends from the under bracket to the top bracket.

The steering shaft is disposed at a higher position than the upper end of the fork pipe in the scooter-type front fork, whereas the upper portion of the front fork is disposed laterally of the steering shaft in the MC-type front fork. Therefore, the MC-type front fork has its upper portion whose width is greater than the scooter-type front fork. Additionally, the upper portion of the front fork is large in the vehicle width direction, and therefore, a volume of a passing space through which the front fork passes when the front fork pivots rightward and leftward with respect to the head pipe is also large.

Normally, the upper portion of the front fork of the scooter is housed in a front cover of the scooter. Members, such as a headlamp, other than the front fork are also housed inside the front cover. If the MC-type front fork is employed in the scooter, a member disposed in the front cover is required to be separated from the passing space through which the fork pipe passes so as not to come into contact with the fork pipe. However, this leads to the enlargement of the front cover.

It is an object of the present invention to provide a scooter that is capable of preventing a front cover from being enlarged in an arrangement in which an upper portion of a motorcycle-type front fork is housed in the front cover. According to the present invention said object is achieved by a scooter according to Claim 1. Preferred embodiments are laid down in the dependent claims.

One preferred embodiment provides a scooter that includes a front wheel, a front fork that supports the front wheel, a frame that includes a head pipe supporting the front fork so as to be turnable rightward and leftward between a rightward maximum steering position and a leftward maximum steering position, a headlamp that emits light forward, and a front cover that houses an upper portion of the front fork and the headlamp.

The front fork includes a right-and-left pair of fork pipes that extend obliquely forward and downward and that are disposed on a right side and on a left side of a vehicle center, respectively, a steering shaft that extends obliquely forward and downward and that is inserted in the head pipe, a top bracket connected to the pair of fork pipes and to the steering shaft, and an under bracket that is disposed at a lower position than the top bracket and that is connected to the pair of fork pipes and to the steering shaft.

The headlamp includes a high-beam light source disposed at the vehicle center and a plurality of low-beam light sources including two or more light sources disposed on the right side of the vehicle center and two or more light sources disposed on the left side of the vehicle center. The plurality of low-beam light sources differ from the high-beam light source. The plurality of low-beam light sources include a right-and-left pair of outer low-beam light sources disposed on the right side and on the left side of the vehicle center, respectively. Each of the pair of outer low-beam light sources is disposed at a more outward position in the vehicle width direction than the plurality of low-beam light sources excluding the pair of outer low-beam light sources, and is disposed at a more rearward position than the plurality of low-beam light sources excluding the pair of outer low-beam light sources.

When the front fork is disposed at the rightward maximum steering position or at the leftward maximum steering position, the fork pipe is disposed between an inner low-beam light source disposed at a most inward position in the vehicle width direction among the plurality of low-beam light sources and the high-beam light source in the vehicle width. A front end of the front cover is disposed at a more rearward position than a front end of the fork pipe in a side view of the scooter.

According to this arrangement, the motorcycle-type front fork is included in the scooter. On the other hand, the plurality of light sources that include the high-beam light source and the plurality of low-beam light sources are included in the headlamp. The front cover houses the upper portion of the front fork and the headlamp.

The plurality of low-beam light sources are disposed on the right side of the vehicle center, and the plurality of low-beam light sources are disposed on the left side of the vehicle center. Additionally, the outer low-beam light source disposed at a most outward position in the vehicle width direction among the plurality of low-beam light sources is disposed at a more rearward position than the other low-beam light sources. In other words, the outer low-beam light source is disposed so as not to overlap with a passing space through which the front fork passes when the front fork is steered.

As described above, the plurality of light sources are included in the headlamp, and these light sources are disposed so as to be separated from each other in the vehicle width direction and in the front-rear direction, and therefore it is possible to efficiently dispose the plurality of light sources while these light sources avoid overlapping with a passing space through which the front fork passes. This makes it possible to reduce the headlamp in size while securing the light emission area of the headlamp.

Additionally, the fork pipe is disposed between the inner low-beam light source disposed at a most inward position in the vehicle width direction among the plurality of low-beam light sources and the high-beam light source in the vehicle width direction when the front fork is disposed at the maximum steering position. In other words, in order to realize this, the plurality of low-beam light sources are disposed so as to be separated from each other in the vehicle width direction. This makes it possible to make the headlamp even smaller in size.

As described above, it is possible to reduce the headlamp in size although the upper portion of the front fork is large, and therefore it is possible to prevent or minimize the enlargement of the front cover. As a result, it is possible to reduce the front cover in size in the front-rear direction so that the front end of the front cover is disposed at a more rearward position than the front end of the fork pipe in a side view of the scooter.

In the present preferred embodiment, at least one of the following features may be added to the above scooter.

Each of the pair of outer low-beam light sources is disposed at a higher position than the plurality of low-beam light sources excluding the pair of outer low-beam light sources.

According to this arrangement, the outer low-beam light source, which is disposed at a most outward position in the vehicle width direction among the plurality of low-beam light sources, is disposed at a more rearward position than the other low-beam light sources, and is disposed at a higher position than the other low-beam light sources. In other words, the plurality of low-beam light sources are disposed so as to be separated from each other not only in the vehicle width direction and the front-rear direction but also in the up-down direction. This makes it possible to reduce the headlamp in size while securing the light emission area of the headlamp.

The high-beam light source is disposed at a height differing from the height of at least one of the plurality of low-beam light sources.

According to this arrangement, the plurality of low-beam light sources are disposed so as to be separated from each other in vehicle width direction and in the front-rear direction and the high-beam light source is disposed at a height different from the heights of the plurality of low-beam light sources. Therefore, it is possible to efficiently dispose the plurality of light sources while these light sources avoid overlapping with the passing space through which the front fork passes. This makes it possible to reduce the headlamp in size.

The plurality of low-beam light sources include a front low-beam light source disposed at a most forward position among the plurality of low-beam light sources, and the high-beam light source is disposed at a more rearward position than the front low-beam light source.

According to this arrangement, the front low-beam light source is disposed at a most forward position among the plurality of low-beam light sources. The outer low-beam light source is disposed at a most rearward position among the plurality of low-beam light sources. The high-beam light source is disposed at a more rearward position than the front low-beam light source. As described above, not only the plurality of low-beam light sources but also the high-beam light source is efficiently disposed, and therefore it is possible to reduce the headlamp in size.

The headlamp further includes a right-and-left pair of upper supported portions supported by the frame and a lower supported portion that is disposed at a lower position than the pair of upper supported portions and that is supported by the frame.

According to this arrangement, the headlamp is supported on the frame by at least three supported portions (the pair of upper supported portions and the lower supported portion). The fork pipe and the steering shaft extend obliquely rearward and upward. The distance in the front-rear direction from the lower end portion (front end portion) of the fork pipe to each portion of the fork pipe excluding the lower end portion becomes greater as the upper end portion of the fork pipe is approached. This means that a space in front of the front fork is made wider in the front-rear direction as the upper end portion of the fork pipe is approached. The upper supported portion is larger in number than the lower supported portion. Therefore, it is possible to secure at least three supported portions in the headlamp while avoiding the enlargement of the front cover in the front-rear direction.

The scooter further includes a front stay that extends forward from the head pipe, and the front stay includes a lower lamp-supporting portion that supports the lower supported portion of the headlamp, and either one of the lower supported portion and the lower lamp-supporting portion includes a support hole, and a remaining one of the lower supported portion and the lower lamp-supporting portion includes a support shaft inserted in the support hole.

According to this arrangement, the lower supported portion of the headlamp is supported by the frame via the lower lamp-supporting portion of the front stay extending forward from head pipe. Either one of the lower supported portion of the headlamp and the lower lamp-supporting portion of the front stay is the support hole, and the other one of the lower supported portion of the headlamp and the lower lamp-supporting portion of the front stay is the support shaft. Therefore, it is possible to connect the lower supported portion of the headlamp and the lower lamp-supporting portion of the front stay together without using a bolt and a nut merely by inserting the support shaft into the support hole. This makes it possible to downsize a structure to connect the lower supported portion of the headlamp and the lower lamp-supporting portion of the front stay with each other.

As described above, the fork pipe and the steering shaft extend obliquely rearward and upward. A space in front of the front fork becomes narrower in the front-rear direction as the lower end portion of the fork pipe is approached. In other words, the front cover is liable to be enlarged in the front-rear direction if a connection structure in which the lower supported portion of the headlamp and the lower lamp-supporting portion of the front stay are connected together is enlarged in the front-rear direction. Therefore, it is possible to prevent the front cover from being enlarged by reducing the connection structure in size.

At least one of the plurality of low-beam light sources and the high-beam light source is an LED light source.

According to this arrangement, an LED light source smaller in size than an electric bulb is used as at least either one of the low-beam light source and the high-beam light source. This makes it possible to make the headlamp even smaller in size and to prevent the front cover from being enlarged.

A front end of the front cover is disposed at a more rearward position than a rotational center of the front wheel in a side view of the scooter.

According to this arrangement, the front end of the front cover is brought close to the head pipe. In other words, the front end of the front cover is disposed at a more rearward position than the rotational center of the front wheel in a side view of the scooter. The front end of the front cover is close to the head pipe, and therefore a member supported by the front fork also becomes close to the head pipe. It is possible for the rider to pivot the steering handle rightward and leftward with a smaller force because the member supported by the front fork is close to the head pipe.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a scooter according to a preferred embodiment.
FIG. 2 is a left side view of a frame included in the scooter.
FIG. 3 is a front view showing a steering handle and a front fork.
FIG. 4 is a right side view showing the steering handle and the front fork.
FIG. 5 is a front view showing a battery, a battery holder, and a front stay.
FIG. 6 is a right side view showing the battery, the battery holder, and the front stay.
FIG. 7 is a front view showing a portion of the front surface of the scooter including a headlamp.
FIG. 8 is an exploded perspective view of the headlamp.
FIG. 9 is a front view to describe a positional relationship among the headlamp, the battery, the battery holder, and the front stay.
FIG. 10 is a right side view to describe a positional relationship among the headlamp, the battery, the battery holder, and the front stay.
FIG. 11 is a cross-sectional view showing a vertical cross section of an upper lamp-supporting portion and an upper supported portion.
FIG. 12 is a cross-sectional view showing a vertical cross section of a lower lamp-supporting portion and a lower supported portion.
FIG. 13 is a cross-sectional view showing a vertical cross section of a reflector taken along line XIII-XIII shown in FIG. 14.
FIG. 14 is a schematic front view of a lamp unit from which a clear cover and a partition have been detached.
FIG. 15 is a front view showing a high-beam light source, a low-beam light source, and the front fork.
FIG. 16 is a right side view showing the high-beam light source, the low-beam light source, and the front fork.
FIG. 17 is a plan view showing the high-beam light source, the low-beam light source, and the front fork.
FIG. 18 is a left side view showing a portion of a scooter according to another preferred embodiment.

### DETAILED DESCRIPTION OF PREFERRED EMBODIMENTS

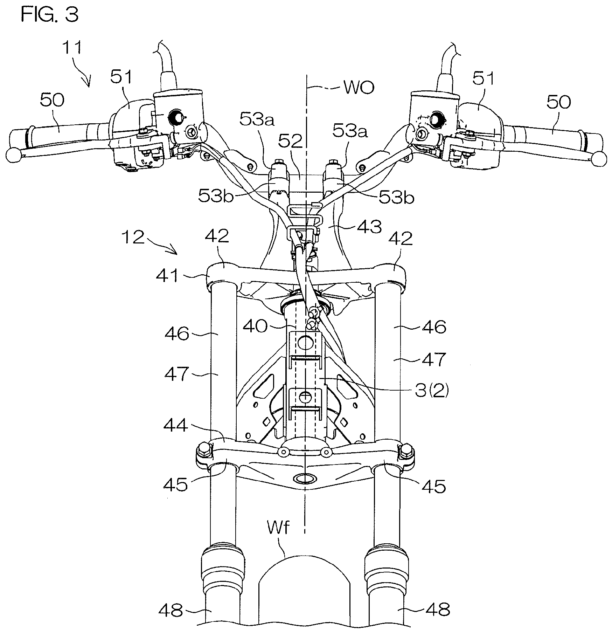

Front-rear, up-down, and right-left directions are defined on the basis of a viewpoint of a forward-facing rider who sits on a scooter 1 in a reference posture in which the scooter 1 travels straight ahead on a horizontal plane (in which a steering handle 11 is disposed at a straight-traveling position). The right-left direction corresponds to a vehicle width direction (a width direction of the scooter 1). A vehicle center WO (refer to FIG. 3) corresponds to a vertical plane that passes through a center line of a head pipe 3 and that is perpendicular to a rotational center of a rear wheel Wr. The scooter 1 in the reference posture will be hereinafter described unless specific notice is given. A front view, a side view, and a plan view mean a front view, a side view, and a plan view of the scooter 1, respectively unless specific notice is given.

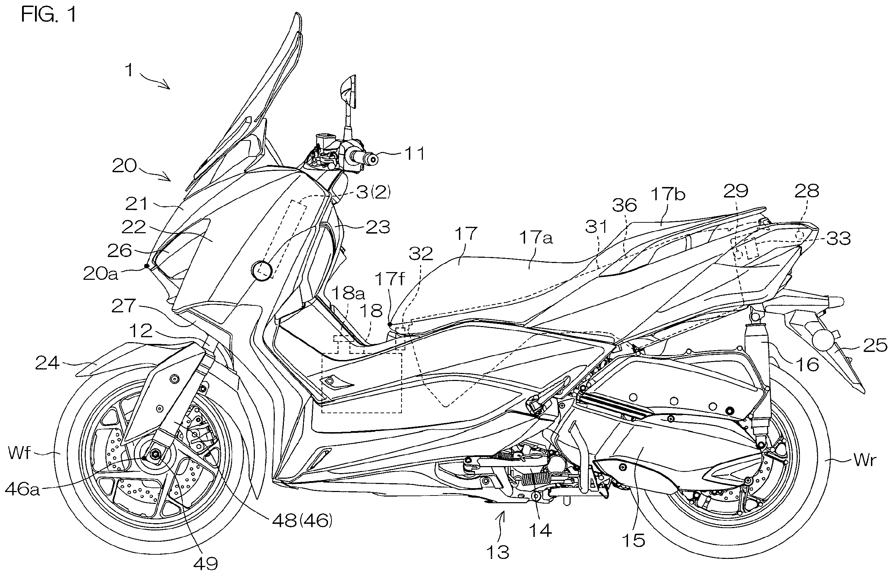

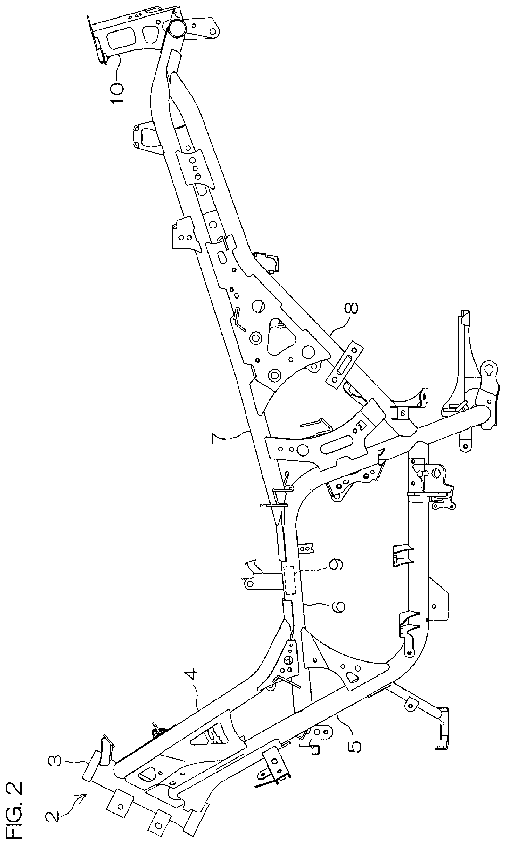

FIG. 1 is a left side view of the scooter 1 according to a preferred embodiment. FIG. 2 is a left side view of a frame 2 included in the scooter 1.

As shown in FIG. 1, the scooter 1, which is an example of a straddled vehicle, includes the frame 2 covered with an exterior cover. The frame 2 includes a head pipe 3 that extends obliquely rearward and upward. As shown in FIG. 2, the frame 2 further includes a right-and-left pair of upper down frames 4 that extend obliquely rearward and downward from the head pipe 3, a right-and-left pair of lower down frames 5 that extend obliquely rearward and downward from the head pipe 3, and a right-and-left pair of lower frames 6 that extend rearward from the lower down frames 5.

The upper down frame 4 is disposed at a higher position than the lower down frame 5, and overlaps with the lower down frame 5 in a plan view. A rear end portion of the upper down frame 4 is disposed at an upper position and at a more forward position than a rear end portion of the lower down frame 5. The rear end portion of the upper down frame 4 and the rear end portion of the lower down frame 5 are each disposed at a more rearward position than a front end portion of the lower frame 6. The rear end portion of the upper down frame 4 and the rear end portion of the lower down frame 5 are connected to the lower frame 6.

The frame 2 includes a right-and-left pair of upper rear frames 7 that extend obliquely rearward and upward from the pair of lower frames 6 and a right-and-left pair of lower rear frames 8 that extend obliquely rearward and upward from the pair of lower frames 6. The frame 2 further includes a front cross member 9 that extends from one lower frame 6 to the other lower frame 6 and a rear cross member 10 that extends from one upper rear frame 7 to the other upper rear frame 7.

The upper rear frame 7 is disposed at a higher position than the lower rear frame 8, and overlaps with the lower rear frame 8 in a plan view. The upper rear frame 7 corresponds to a seat frame. The front end portion of the upper rear frame 7 is disposed at a higher position and at a more forward position than the front end portion of the lower rear frame 8. The rear end portion of the upper rear frame 7 is disposed at a more rearward position than the rear end portion of the lower rear frame 8. The rear end portion of the lower rear frame 8 is connected to the upper rear frame 7.

As shown FIG. 1, the scooter 1 includes a steering handle 11 to be steered by a rider, and a front fork 12 rotatably supporting the front wheel Wf. The steering handle 11 is coupled to the front fork 12, which is an example of a front wheel supporting member. The steering handle 11 and the front fork 12 are pivotable with respect to the frame 2 around a steering axis corresponding to a central line of the head pipe 3. When the steering handle 11 is steered, the front wheel Wf is pivoted rightward and leftward together with the steering handle 11. The scooter 1 is thereby steered.

The scooter 1 includes a swing unit 13 swingable upward and downward with respect to the frame 2. The swing unit 13 includes an engine 14, which generates a motive power that makes the scooter 1 travel, and a driving mechanism 15, transmitting the motive power of the engine 14 to the rear wheel Wr. The swing unit 13 is mounted on the frame 2 via a pivot shaft extending in the vehicle width direction. The rear wheel Wr is rotatably supported by a rear end portion of the swing unit 13. The rear wheel Wr and the swing unit 13 are swingable upward and downward around the pivot shaft with respect to the frame 2. An upper end portion of a rear cushion 16 is mounted on the frame 2 and a lower end portion of the rear cushion 16 is mounted on the rear end portion of the swing unit 13.

The scooter 1 includes a saddle type seat 17 on which a rider sits. FIG. 1 shows an example in which a main seat 17a on which the rider sits and a tandem seat 17b on which a pillion passenger sits are provided at the seat 17. The seat 17 may be a seat for a single person. The seat 17 is disposed at a more rearward position than the head pipe 3 of the frame 2. The seat 17 is disposed above the upper rear frame 7 in a side view. The seat 17 is supported by the frame 2. An oil filler opening 18a of a fuel tank 18 is disposed at a more forward position than a front end 17f of the seat 17.

The exterior cover includes a front cover 20 that houses an upper portion of the front fork 12. The front cover 20 includes a front center cover 21 disposed in front of the head pipe 3, a right-and-left pair of front side covers 22 that are disposed on the right side and on the left side of the front center cover 21, respectively, and an inner panel 23 disposed behind the head pipe 3. The inner panel 23 corresponds to a leg shield to be disposed in front of the legs of the rider sitting on the seat 17. A front fender 24 is disposed above the front wheel Wf. A mudguard 25 corresponding to a rear fender is disposed above and behind the rear wheel Wr.

The scooter 1 includes a headlamp 26 that emits light forward and two front flashers 27 that flash in accordance with an operation of the rider. The scooter 1 further includes a tail lamp 28 that emits light rearward and two rear flashers 29 that flash in accordance with an operation of the rider. The headlamp 26 and the front flashers 27 are disposed further to the front than the seat 17. The tail lamp 28 and the rear flashers 29 are disposed further to the rear than a front end of the rear wheel Wr.

The scooter 1 includes a storage box 31 that is opened and closed by the seat 17. The storage box 31 is disposed behind the fuel tank 18. A front end portion of the seat 17 is attached to the frame 2 via a hinge 32. The seat 17 is turnable upward and downward with respect to the storage box 31 between a closed position (position shown by the solid line in FIG. 1) at which an opening 36 of the storage box 31 is closed by the seat 17 and an open position at which the opening 36 of the storage box 31 is opened. When the seat 17 Is lowered to the closed position, a rear end portion of the seat 17 is locked in the frame 2 by a seat locking device 33. The locking of the seat 17 by the seat locking device 33 is released by an unlocking device in accordance with the operation of an operator.

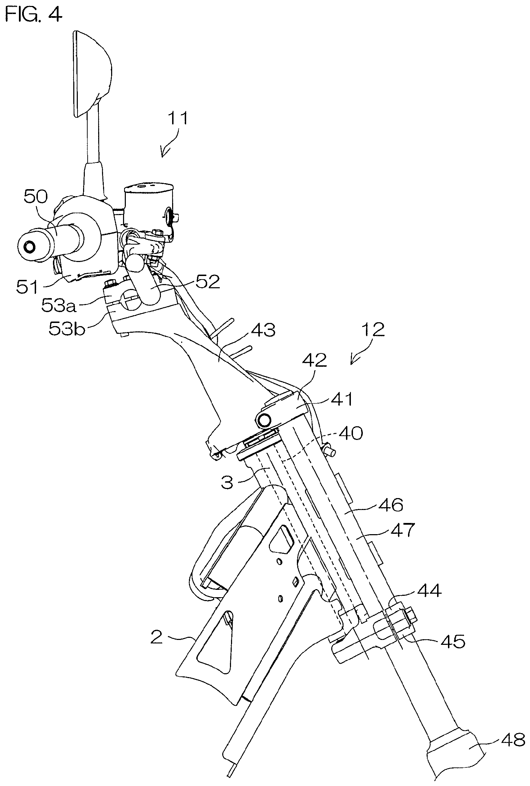

FIG. 3 and FIG. 4 are a front view and a right side view, respectively, showing the steering handle 11 and the front fork 12.

The front fork 12 is a motorcycle-type telescopic fork. As shown in FIG. 3, the front fork 12 includes a right-and-left pair of fork pipes 46 that are extensible and contractible in an axial direction of the fork pipe 46, a top bracket 41 connected to the pair of fork pipes 46, and an under bracket 44 that is disposed at a lower position than the top bracket 41 and that is connected to the pair of fork pipes 46. The front fork 12 further includes a steering shaft 40 that extends from the under bracket 44 to the top bracket 41. The steering shaft 40 is also called a steering stem.

The pair of fork pipes 46 are disposed on the right side and on the left side of the vehicle center WO, respectively. The steering shaft 40 and the head pipe 3 are disposed between the pair of fork pipes 46 in a front view. The steering shaft 40 is inserted in the head pipe 3. The head pipe 3 is disposed between the top bracket 41 and the under bracket 44. As shown in FIG. 4, the fork pipe 46 and the steering shaft 40 extend obliquely forward and downward. The central line of the steering shaft 40 is disposed at a more rearward position than the central line of the fork pipe 46.

As shown in FIG. 3, the fork pipe 46 includes an outer tube 48 that extends in the axial direction of the fork pipe 46 and an inner tube 47 inserted in the outer tube 48. The outer tube 48 and the inner tube 47 are relatively movable in the axial direction of the fork pipe 46. The inner tube 47 extends upward from an upper end surface of the outer tube 48 in the axial direction of the fork pipe 46.

The top bracket 41 and the under bracket 44 are attached to the inner tube 47. The top bracket 41 and the under bracket 44 are each disposed at a higher position than the outer tube 48. The front wheel Wf is disposed between the pair of the outer tubes 48. As shown in FIG. 1, the front wheel Wf is supported by the pair of outer tubes 48 via an axle 49 attached to a lower end portion of the outer tube 48, i.e., attached to a lower end portion of the fork pipe 46. A front end 20a of the front cover 20 is disposed at a more rearward position than a front end 46a of the fork pipe 46 in a side view.

As shown in FIG. 3, the top bracket 41 includes a right-and-left pair of upper holder portions 42 attached to the pair of fork pipes 46. Likewise, the under bracket 44 includes a right-and-left pair of lower holder portions 45 attached to the pair of fork pipes 46. The top bracket 41 includes, in addition to the upper holder portions 42, a handle pedestal portion 43 that supports the steering handle 11.

The pair of upper holder portions 42 are disposed at a right end portion and a left end portion of the top bracket 41, respectively. The handle pedestal portion 43 extends upward from the central portion of the top bracket 41. The upper holder portion 42 has an annular shape that surrounds the inner tube 47. The inner tube 47 protrudes upward from the upper holder portion 42. A bolt that fixes the upper holder portion 42 to the inner tube 47 is attached to the upper holder portion 42. The inner tube 47 is tightened by the upper holder portion 42.

The steering handle 11 includes a right-and-left pair of handle grips 50 grasped by the rider, a handle bar 52 that supports the pair of handle grips 50, and a right-and-left pair of handle switches 51 operated by the rider. The central portion of the handle bar 52 is attached to the handle pedestal portion 43 of the top bracket 41 via an upper holder 53a and a lower holder 53b of a handle holder. The handle bar 52 is sandwiched by the upper holder 53a and the lower holder 53b in the up-down direction. The upper holder 53a and the lower holder 53b are fixed to the handle pedestal portion 43 by bolts.

The pair of handle grips 50 include a right grip attached to a right end portion of the handle bar 52 and a left grip attached to a left end portion of the handle bar 52. The right grip is a throttle grip that is rotatable with respect to the handle bar 52. The output of the engine 14 is adjusted in accordance with the amount of rotation of the throttle grip. The pair of handle switches 51 include a right switch disposed between the right grip and the handle holder and a left switch disposed between the left grip and the handle holder. The right and left switches are provided with a plurality of switches including a turn signal switch that flashes the front flasher 27 and the rear flasher 29.

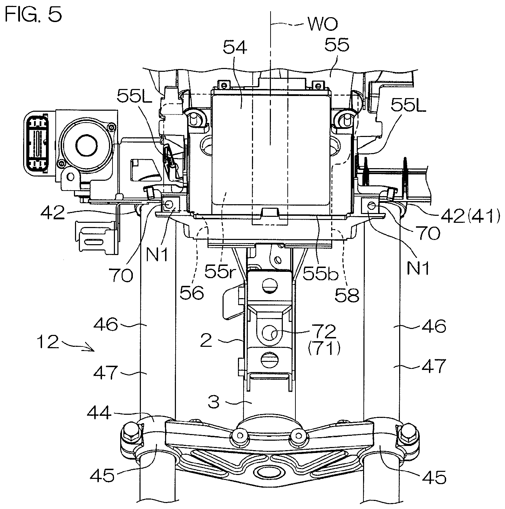

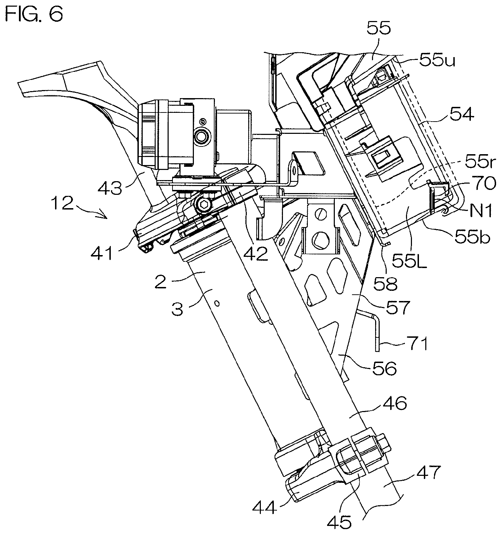

FIG. 5 and FIG. 6 are a front view and a right side view, respectively, showing a battery 54, a battery holder 55, and a front stay 56.

The scooter 1 includes the battery 54 that saves electric power to be supplied to electric apparatuses included in the scooter 1. The battery 54 is housed in the front cover 20. The battery 54 is disposed behind the front center cover 21. The battery 54 is disposed in front of the head pipe 3 and the top bracket 41. As shown in FIG. 5, the battery 54 overlaps with the head pipe 3 and with the top bracket 41 in a front view. The battery 54 is disposed at a higher position than the under bracket 44.

As shown in FIG. 6, the battery 54 is supported by the head pipe 3 via the front stay 56 and the battery holder 55. The front stay 56 extends forward from the head pipe 3. The front stay 56 is fixed to the head pipe 3. The battery holder 55 is fixed to the front stay 56. The battery 54 does not pivot rightward and leftward with respect to the head pipe 3 even if the steering handle 11 is steered rightward and leftward.

The front stay 56 includes a battery support portion 58 that supports the battery 54 via the battery holder 55, and a base portion 57 that supports the battery support portion 58. The base portion 57 extends forward from the head pipe 3. The base portion 57 is fixed to the head pipe 3. The battery support portion 58 is disposed in front of the base portion 57. The battery support portion 58 is fixed to the base portion 57.

The battery support portion 58 is disposed at a more forward position than the pair of fork pipes 46 in a side view. The battery support portion 58 is disposed at a higher position than the under bracket 44. The battery support portion 58 is disposed in front of the top bracket 41. The battery support portion 58 is away forward from the upper holder portion 42 and the handle pedestal portion 43 of the top bracket 41 in a side view. The battery support portion 58 includes a flat support surface that supports a rear surface of the battery holder 55.

The battery holder 55 includes an upper wall portion 55u disposed above the battery 54, a bottom wall portion 55b disposed under the battery 54, a right-and-left pair of sidewall portions 55L disposed on the right side and on the left side of the battery 54, respectively, and a rear wall portion 55r disposed behind the battery 54. The rear wall portion 55r is disposed in front of the battery support portion 58 of the front stay 56. A rear surface of the battery holder 55 (i.e., a rear surface of the rear wall portion 55r) is disposed on a front surface of the battery support portion 58. The battery 54 is put into the battery holder 55 from the front of the battery holder 55. The battery 54 is held in the battery holder 55 using a band shown by the alternate long and two short dashed line.

Next, the headlamp 26 will be described in detail.

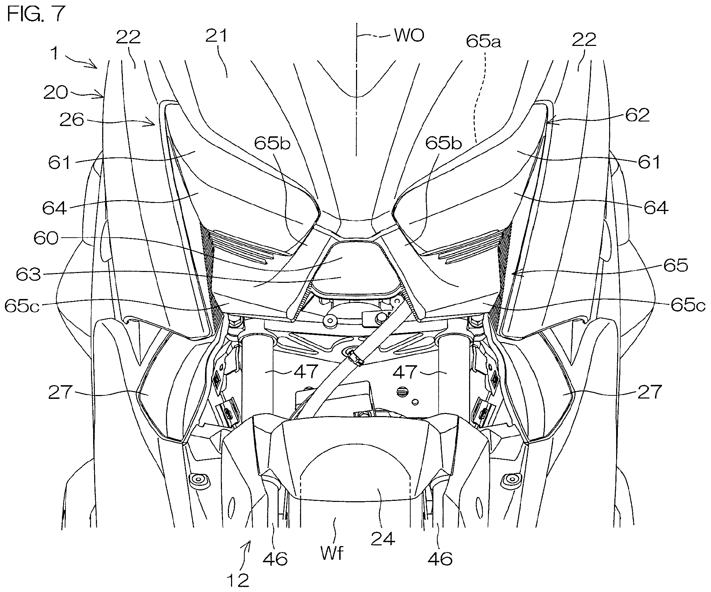

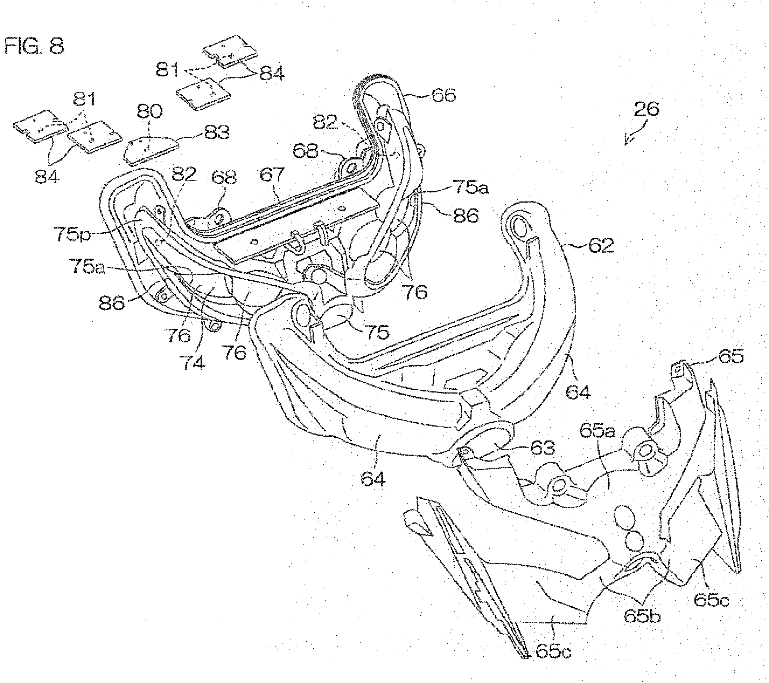

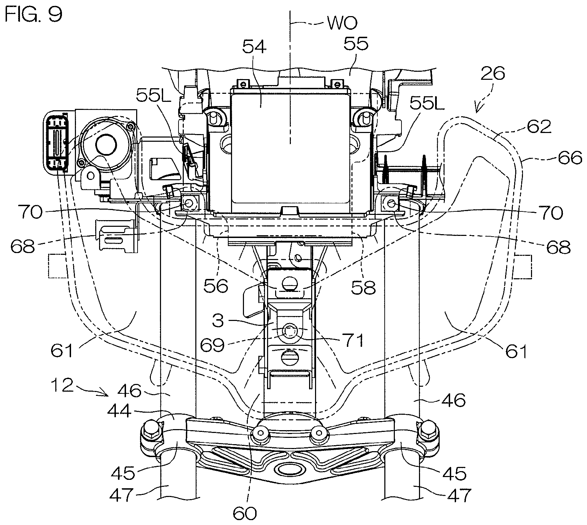

FIG. 7 is a front view showing a portion of the front surface of the scooter 1 including the headlamp 26. FIG. 8 is an exploded perspective view of the headlamp 26. FIG. 9 and

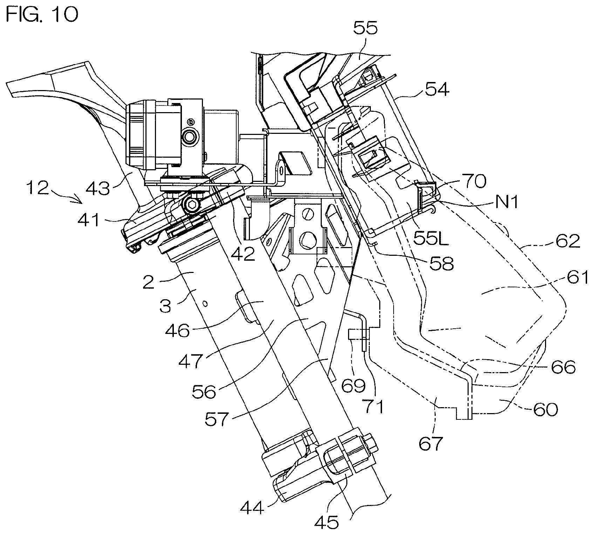

FIG. 10 are a front view and a right side view, respectively, to describe a positional relationship among the headlamp 26, the battery 54, the battery holder 55, and the front stay 56. In FIG. 9 and FIG. 10, a lamp housing 66 and a clear cover 62 of the headlamp 26 are shown by the alternate long and two short dashed line.

As shown in FIG. 7, the headlamp 26 includes a high beam lamp 60 disposed at the vehicle center WO and a right-and-left pair of low beam lamps 61 disposed on the right side and on the left side of the vehicle center WO, respectively. A position lamp is included in the low beam lamp 61. An upper end portion of the high beam lamp 60 is disposed between the pair of low beam lamps 61. The high beam lamp 60 and the low beam lamp 61 are each disposed at a higher position than the front flasher 27.

As shown in FIG. 8, the headlamp 26 includes a lamp unit that emits light and a lamp cover 65 disposed in front of the lamp unit. The lamp unit includes a plurality of light sources 80 to 82 that emit light in accordance with the supply of electric power and the lamp housing 66 that holds the plurality of light sources 80 to 82. The lamp unit further includes a reflector 74 that reflects the light of the plurality of light sources 80 to 82, the clear cover 62 through which light reflected by the reflector 74 passes forward, and a partition 75p that partitions a space between the reflector 74 and the clear cover 62.

As shown in FIG. 7, the clear cover 62 includes a high beam cover 63 disposed in front of a high reflector 75 described below and a pair of low beam covers 64 disposed in front of a pair of low reflectors 76 described below. A surface of the clear cover 62 is partitioned by the lamp cover 65. The lamp cover 65 includes a right-and-left pair of partitioning portions 65b disposed between the high beam cover 63 and the low beam cover 64, a right-and-left pair of lower portions 65c disposed under the pair of low beam covers 64, respectively, and an upper portion 65a disposed over the high beam cover 63 and the low beam cover 64.

As shown in FIG. 8, the reflector 74 and the partition 75p are attached to the lamp housing 66. Likewise, the clear cover 62 and the lamp cover 65 are attached to the lamp housing 66. The plurality of light sources 80 to 82 are held by the lamp housing 66. The clear cover 62 is disposed in front of the lamp housing 66. The plurality of light sources 80 to 82, the reflector 74, and the partition 75p are housed in a housing space defined between the clear cover 62 and the lamp housing 66.

As shown in FIG. 9, the lamp housing 66 includes a central portion disposed under the battery 54 in a front view. The right-and-left pair of upper end portions of the lamp housing 66 are disposed on the right side and on the left side of the battery 54, respectively, in a front view. The fork pipe 46 is disposed at a more inward position in the vehicle width direction than the upper end portion of the lamp housing 66. As shown in FIG. 10, the upper end portion of the lamp housing 66 overlaps with the battery 54 in a side view.

As shown in FIG. 9, the lamp housing 66 includes a housing portion 67 to which the clear cover 62 is attached, a right-and-left pair of upper supported portions 68 supported by the head pipe 3 via the battery holder 55 and the front stay 56, and a lower supported portion 69 supported by the head pipe 3 via the front stay 56. The upper supported portion 68 is disposed at a higher position than the lower supported portion 69. The pair of upper supported portions 68 are disposed on the right side and on the left side of the vehicle center WO, respectively. The lower supported portion 69 is disposed at and overlapped with the vehicle center WO. The upper supported portion 68 protrudes upward from the housing portion 67. As shown in FIG. 10, the lower supported portion 69 protrudes rearward from the housing portion 67.

As shown in FIG. 9, the battery holder 55 includes a right-and-left pair of upper lamp-supporting portions 70 that supports the headlamp 26. The upper lamp-supporting portion 70 extends outward in the vehicle width direction from the sidewall portion 55L of the battery holder 55. The pair of upper lamp-supporting portions 70 are disposed on the right side and on the left side of the vehicle center WO, respectively. The battery 54 is disposed between the pair of upper lamp-supporting portions 70 in a front view. The upper lamp-supporting portion 70 is disposed in front of the fork pipe 46, and overlaps with the fork pipe 46 in a front view.

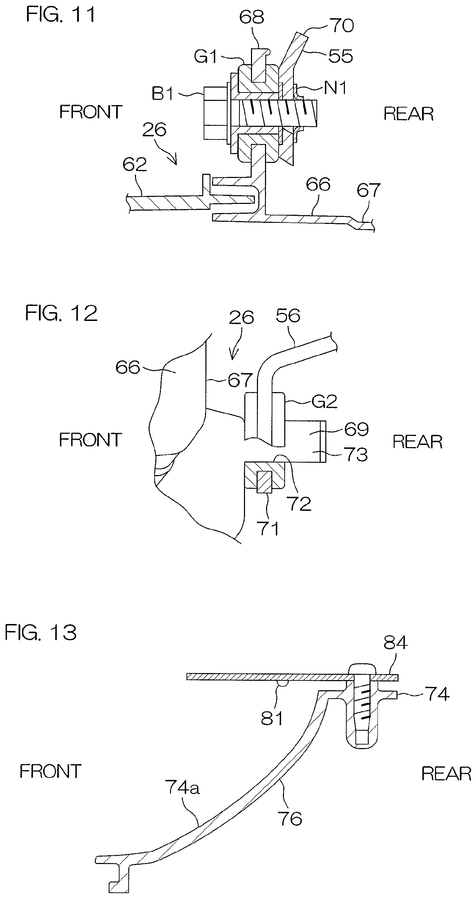

FIG. 11 is a cross-sectional view showing a vertical cross section of the upper lamp-supporting portion 70 and the upper supported portion 68. As shown in FIG. 11, the upper supported portion 68 of the lamp housing 66 is disposed in front of the upper lamp-supporting portion 70 of the battery holder 55. The upper supported portion 68 is supported by the upper lamp-supporting portion 70 via a cylindrical upper grommet G1 made of an elastic material, such as rubber or resin. The upper grommet G1 is attached to the upper supported portion 68. A nut N1 is attached to the upper lamp-supporting portion 70. The nut N1 is, for example, a spring nut made of a U-shaped metallic plate.

A head portion of the bolt B1 is disposed in front of the upper supported portion 68 of the lamp housing 66. A shaft portion of the bolt B1 passes through the upper supported portion 68 and through the upper grommet G1 in the front-rear direction, and protrudes rearward from the upper supported portion 68 and from the upper grommet G1. The nut N1 is attached to a tip portion of the shaft portion of the bolt B1. As a result, the upper supported portion 68 of the lamp housing 66 is connected to the upper lamp-supporting portion 70 of the battery holder 55 via the upper grommet G1.

As shown in FIG. 10, the front stay 56 includes, in addition to the battery support portion 58 and the base portion 57, a lower lamp-supporting portion 71 that supports the headlamp 26. The lower lamp-supporting portion 71 is disposed in front of the base portion 57. The lower lamp-supporting portion 71 is fixed to the base portion 57. The lower lamp-supporting portion 71 is disposed below the battery support portion 58. The lower lamp-supporting portion 71 is disposed at a lower position than the upper lamp-supporting portion 70 of the battery holder 55.

The lower lamp-supporting portion 71 is disposed at a more forward position than the pair of fork pipes 46 in a side view. The lower lamp-supporting portion 71 is disposed at a higher position than the under bracket 44 and at a lower position than the top bracket 41. As shown in FIG. 9, the lower lamp-supporting portion 71 is disposed in front of the head pipe 3. The lower lamp-supporting portion 71 is disposed between the pair of fork pipes 46 in a front view. The lower lamp-supporting portion 71 is disposed below the battery 54.

FIG. 12 is a cross-sectional view showing a vertical cross section of the lower lamp-supporting portion 71 and the lower supported portion 69. As shown in FIG. 12, the lower supported portion 69 of the lamp housing 66 is a support shaft 73 that protrudes rearward from the housing portion 67 of the lamp housing 66. The lower lamp-supporting portion 71 of the front stay 56 is a support hole 72 that passes through the front stay 56 in the front-rear direction. A cylindrical lower grommet G2 made of an elastic material, such as rubber or resin, is attached to the lower lamp-supporting portion 71. The lower supported portion 69 is inserted in the lower grommet G2. A tip portion of the lower supported portion 69 protrudes rearward from the lower grommet G2 and from the lower lamp-supporting portion 71. The lower supported portion 69 is supported by an inner peripheral surface of the support hole 72 via the lower grommet G2.

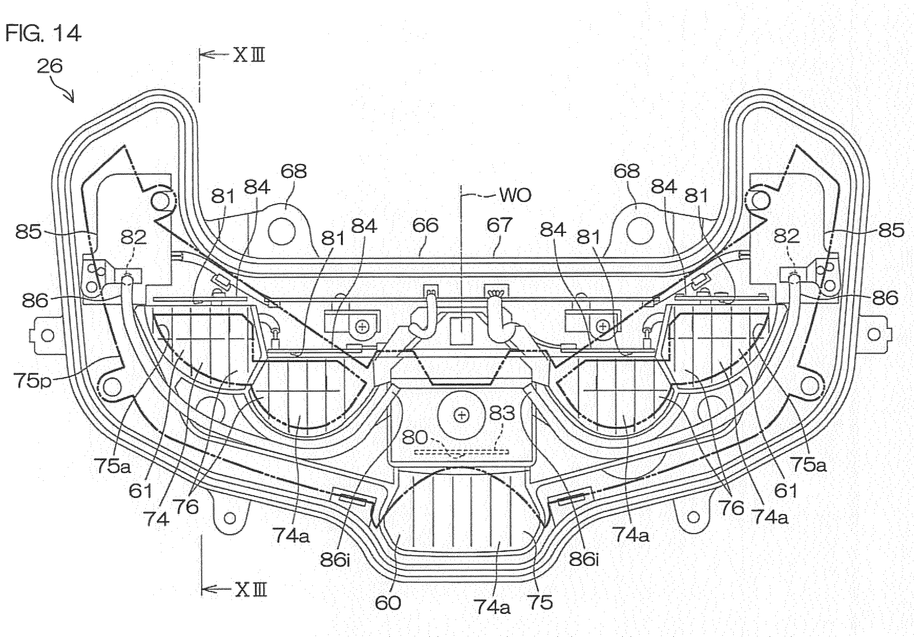

FIG. 13 is a cross-sectional view showing a vertical cross section of the reflector 74 taken along line XIII-XIII shown in FIG. 14. FIG. 14 is a schematic front view of the lamp unit from which the clear cover 62 and the partition 75p have been detached. In FIG. 14, the partition 75p is shown by the alternate long and two short dashed line.

The plurality of light sources 80 to 82 include a light source 80 for the high beam lamp 60 (hereinafter, referred to as a "high-beam light source 80"), a plurality of light sources 81 for the low beam lamps 61 (hereinafter, referred to as "low-beam light sources 81"), and a plurality of light sources 82 for the position lamps (hereinafter, referred to as "position light sources 82").

FIG. 14 shows an example in which the plurality of low-beam light sources 81 include two low-beam light sources 81 disposed on the right side of the vehicle center WO and two low-beam light sources 81 disposed on the left side of the vehicle center WO and in which the plurality of position light sources 82 include a position light source 82 disposed on the right side of the vehicle center WO and a position light source 82 disposed on the left side of the vehicle center WO. Each low-beam light source 81 is disposed at a more inward position in the vehicle width direction than the position light source 82. The number of low-beam light sources 81 may be less than four or may exceed four. Likewise, the number of position light sources 82 may be less than two or may exceed two. The plurality of light sources 80 to 82 may include two or more high-beam light sources 80.

The high beam lamp 60, the low beam lamp 61, and the position lamp are all LED lamps. The high-beam light source 80, the low-beam light source 81, and the position light source 82 are all LED light sources. The LED light source is held by an LED board. Hereinafter, the LED board that holds the high-beam light source 80 is referred to as a high-beam board 83, the LED board that holds the low-beam light source 81 is referred to as a low-beam board 84, and the LED board that holds the position light source 82 is referred to as a position board 85.

The high-beam board 83 and the low-beam board 84 are attached to the reflector 74. The position board 85 is attached to the lamp housing 66. The high-beam board 83 and the low-beam board 84 are held in a horizontal posture. The high-beam light source 80 and the low-beam light source 81 are disposed below the high-beam board 83 and the low-beam board 84, respectively. The position board 85 is held in a vertical posture perpendicular to the front-rear direction. The position light source 82 is disposed in front of the position board 85.

The reflector 74 includes a high reflector 75 that reflects the light of the high-beam light source 80 forward and a plurality of low reflectors 76 each of which reflects the light of each of the plurality of low-beam light sources 81 forward. Each low reflector 76 is integral with the high reflector 75. Two of the low reflectors 76 are disposed on the right side of the vehicle center WO, whereas the remaining two low reflectors 76 are disposed on the left side of the vehicle center WO. The high reflector 75 is disposed at a lower position than every low reflector 76. The high reflector 75 overlaps with the vehicle center WO.

The two low reflectors 76 on the right side are away from two low reflectors 76 on the left side in the vehicle width direction. The two low reflectors 76 on the right side are arranged in the vehicle width direction, and are connected together. Likewise, the two low reflectors 76 on the left side are arranged in the vehicle width direction, and are connected together. Upper ends of the two low reflectors 76 on the outer side are disposed at higher positions than upper ends of the two low reflectors 76 on the inner side, respectively.

As shown in FIG. 13, the low reflector 76 includes a reflecting surface 74a that has a circular-arc-shaped vertical cross section that is open forward and upward. The low-beam light source 81 is disposed above the reflecting surface 74a of the low reflector 76. The low-beam board 84 is fixed to the low reflector 76. Likewise, the high-beam light source 80 is disposed above a circular-arc-shaped reflecting surface 74a of the high reflector 75, and the high-beam board 83 is fixed to the high reflector 75.

As shown in FIG. 14, the high-beam light source 80 and the low-beam light source 81 are disposed behind the partition 75p. Likewise, the reflector 74 is disposed behind the partition 75. The high reflector 75 includes a portion disposed below the partition 75p in a front view. The partition 75p includes a right-and-left pair of lamp holes 75a each of which passes through the partition 75p in the front-rear direction. The two low reflectors 76 on the right side are exposed at the lamp hole 75a located on the right side in a front view. Likewise, the two low reflectors 76 on the left side are exposed at the lamp hole 75a located on the left side in a front view.

The position light source 82 is disposed behind the partition 75p. The headlamp 26 includes a light guiding member 86 that guides the light of the position light source 82 and that reflects the light forward. The light guiding member 86 extends from the position light source 82 to the front of the partition 75p through an insertion hole provided with the partition 75 (see FIG. 8 also). The light guiding member 86 on the right side is disposed below the two low reflectors 76 on the right side. The light guiding member 86 on the left side is disposed below the two low reflectors 76 on the left side. An inner end portion 86i of the light guiding member 86 in the vehicle width direction is disposed between the two low reflectors 76 on the right side and the two low reflectors 76 on the left side.

The light of the position light source 82 enters the inside of the light guiding member 86 from an incidence surface disposed at an outer end portion of the light guiding member 86. The light that has struck the light guiding member 86 is reflected forward by the reflecting surface of the light guiding member 86 while advancing toward the inner end portion 86i of the light guiding member 86 inside the light guiding member 86. The light reflected by the reflecting surface of the light guiding member 86 is emitted forward from a light emission surface of the light guiding member 86. In this way, the light of the position light source 82 is emitted forward from the light guiding member 86 while being guided in the axial direction of the light guiding member 86 by the light guiding member 86.

Next, a detailed description will be given of the disposition of the high-beam light source 80 and the low-beam light source 81.

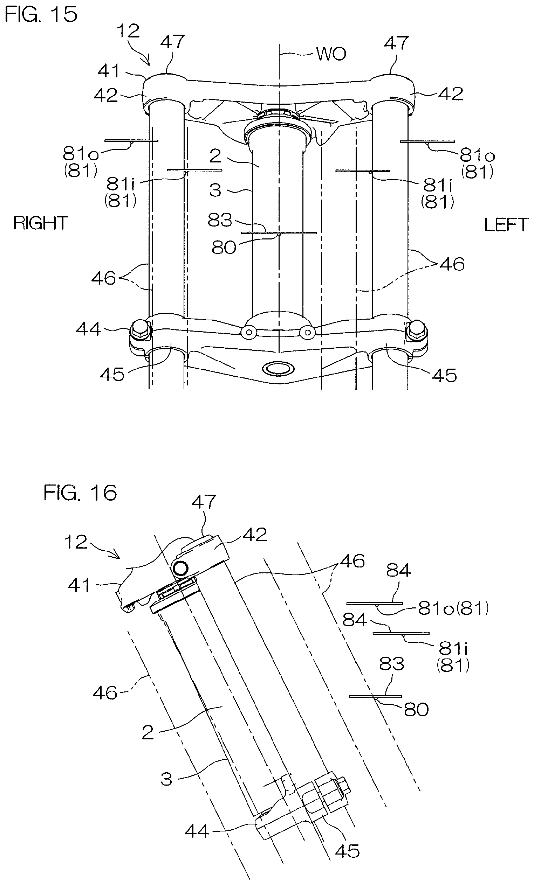

FIG. 15, FIG. 16, and FIG. 17 are a front view, a right side view, and a plan view, respectively, showing the high-beam light source 80, the low-beam light source 81, and the front fork 12.

In FIG. 15 to FIG. 17, the pair of fork pipes 46 are shown by the solid line when the front fork 12 is located at a straight-traveling position (position between a rightward maximum steering position and a leftward maximum steering position), whereas the pair of fork pipes 46 are shown by the alternate long and two short dashed line when the front fork 12 is located at the rightward maximum steering position. The rightward maximum steering position of the front fork 12 is a position symmetrical to the leftward maximum steering position of the front fork 12 with respect to the vehicle center WO. A description will be hereinafter given of a state in which the front fork 12 is located at the straight-traveling position particularly unless specific notice is given.

As shown in FIG. 15, the high-beam light source 80 is disposed at a lower position than every low-beam light source 81. The high-beam light source 80 is disposed at the vehicle center WO. The four low-beam light sources 81 are disposed symmetrically with respect to the vehicle center WO. The four low-beam light sources 81 include a right-and-left pair of outer low-beam light sources 81o disposed on the right side and on the left side of the vehicle center WO, respectively, and a right-and-left pair of inner low-beam light sources 81i disposed on the right side and on the left side of the vehicle center WO, respectively.

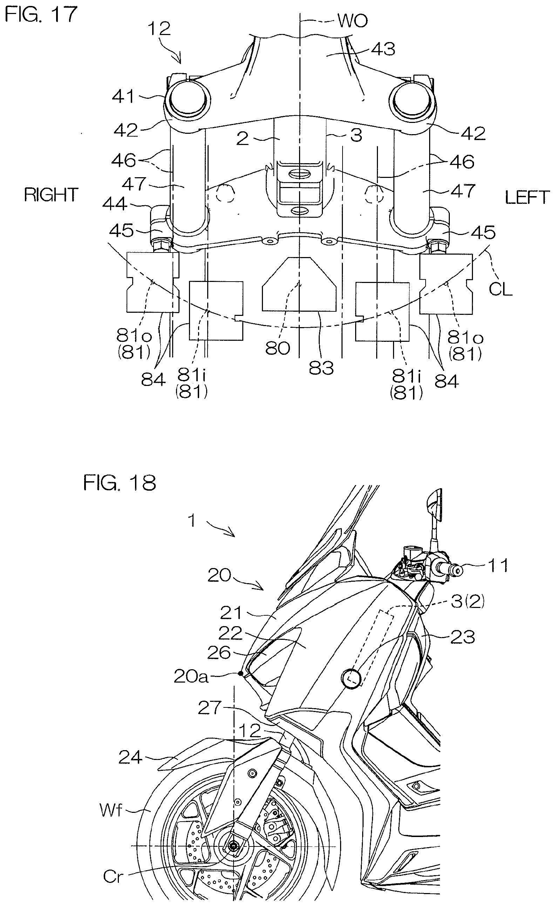

The outer low-beam light source 81o is disposed at a more outward position in the vehicle width direction than the inner low-beam light source 81i. As shown in FIG. 16, the outer low-beam light source 81o is disposed at a higher position and at a more rearward position than the inner low-beam light source 81i. As shown in FIG. 17, the plurality of low-beam light sources 81 are disposed on an arch-shaped curve CL that is open rearward in a plan view. The high-beam light source 80 is disposed behind the curve CL in a plan view.

As shown in FIG. 15, the high-beam light source 80 overlaps with the head pipe 3 in a front view. The high-beam light source 80 is disposed between the pair of fork pipes 46 in a front view. The head pipe 3 is disposed between the pair of inner low-beam light sources 81i in a front view. The pair of fork pipes 46 are disposed between the pair of outer low-beam light sources 81o in a front view. The high-beam light source 80 and the low-beam light source 81 are each disposed at a lower position than the upper end of the fork pipe 46 and are each disposed at a higher position than the under bracket 44.

The fork pipe 46 is disposed between the outer low-beam light source 81o and the inner low-beam light source 81i in a front view. The pair of fork pipes 46 pivot rightward around the central line of the head pipe 3 when the steering handle 11 is pivoted rightward. At this time, the fork pipe 46 on the right side moves rearward while moving rightward, and the fork pipe 46 on the left side moves forward while moving rightward.

As shown by the alternate long and two short dashed line in FIG. 15, the fork pipe 46 on the left side is disposed between the inner low-beam light source 81i located on the left side of the vehicle center WO and the high-beam light source 80 when the steering handle 11 is pivoted to the rightward maximum steering position. On the contrary, the fork pipe 46 on the right side is disposed between the inner low-beam light source 81i located on the right side of the vehicle center WO and the high-beam light source 80 when the steering handle 11 is pivoted to the leftward maximum steering position. As shown in FIG. 16, the plurality of low-beam light sources 81 are positioned in front of both fork pipes 46 even when the fork pipe 46 is located at any position.

As described above, in the present preferred embodiment, the motorcycle-type front fork 12 is included in the scooter 1. On the other hand, the plurality of light sources 80 to 82 that include the high-beam light source 80 and the plurality of low-beam light sources 81 are included in the headlamp 26. The front cover 20 houses the upper portion of the front fork 12 and the headlamp 26.

The plurality of low-beam light sources 81 are disposed on the right side of the vehicle center WO, and the plurality of low-beam light sources 81 are disposed on the left side of the vehicle center WO. Additionally, the outer low-beam light source 81o disposed at a most outward position in the vehicle width direction among the plurality of low-beam light sources 81 is disposed at a more rearward position than the other low-beam light sources 81. In other words, the outer low-beam light source 81o is disposed so as not to overlap with a passing space through which the front fork 12 passes when the front fork 12 is steered.

As described above, the plurality of light sources 80 to 82 are included in the headlamp 26, and these light sources are disposed so as to be separated from each other in the vehicle width direction and in the front-rear direction, and therefore it is possible to efficiently dispose the plurality of light sources 80 to 82 while these light sources avoid overlapping with a passing space through which the front fork 12 passes. This makes it possible to reduce the headlamp 26 in size while securing the light emission area of the headlamp 26.

Additionally, the fork pipe 46 is disposed between the inner low-beam light source 81i disposed at a most inward position in the vehicle width direction among the plurality of low-beam light sources 81 and the high-beam light source 80 in the vehicle width direction when the front fork 12 is disposed at the maximum steering position. In other words, in order to realize this, the plurality of low-beam light sources 81 are disposed so as to be separated from each other in the vehicle width direction. This makes it possible to make the headlamp 26 even smaller in size.

As described above, it is possible to reduce the headlamp 26 in size although the upper portion of the front fork 12 is large, and therefore it is possible to prevent or minimize the enlargement of the front cover 20. As a result, it is possible to reduce the front cover 20 in size in the front-rear direction so that the front end 20a of the front cover 20 is disposed at a more rearward position than the front end 46a of the fork pipe 46 in a side view.

In the present preferred embodiment, the outer low-beam light source 81o disposed at a most outward position in the vehicle width direction among the plurality of low-beam light sources 81 is disposed at a more rearward position than the other low-beam light sources 81, and is disposed at a higher position than the other low-beam light sources 81. In other words, the plurality of low-beam light sources 81 are disposed so as to be separated from each other not only in the vehicle width direction and the front-rear direction but also in the up-down direction. This makes it possible to reduce the headlamp 26 in size while securing the light emission area of the headlamp 26.

In the present preferred embodiment, the high-beam light source 80 is disposed at a height differing from the heights of the plurality of low-beam light sources 81 without being limited to the fact that the plurality of low-beam light sources 81 are disposed so as to be separated from each other in the vehicle width direction and in the front-rear direction. Therefore, it is possible to efficiently dispose the plurality of light sources 80 to 82 while these light sources avoid overlapping with a passing space through which the front fork 12 passes. This makes it possible to reduce the headlamp 26 in size.

In the present preferred embodiment, the inner low-beam light source 81i corresponding to a front low-beam light source is disposed at a most forward position among the plurality of low-beam light sources 81. The outer low-beam light source 81o is disposed at a most rearward position among the plurality of low-beam light sources 81. The high-beam light source 80 is disposed at a more rearward position than the inner low-beam light source 81i. As described above, not only the plurality of low-beam light sources 81 but also the high-beam light source 80 is efficiently disposed, and therefore it is possible to reduce the headlamp 26 in size.

In the present preferred embodiment, the headlamp 26 is supported on the frame 2 by the pair of the upper supported portions 68 and the lower supported portion 69. The distance in the front-rear direction from the lower end portion (front end portion) of the fork pipe 46 to each portion of the fork pipe 46 excluding the lower end portion becomes greater as the upper end portion of the fork pipe 46 is approached. This means that a space in front of the front fork 12 is made wider in the front-rear direction in proportion to an approach to the upper end portion of the fork pipe 46. The upper supported portion 68 is larger in number than the lower supported portion 69. Therefore, it is possible to secure at least three supported portions in the headlamp 26 while avoiding the enlargement of the front cover 20 in the front-rear direction.

In the present preferred embodiment, the lower supported portion 69 of the headlamp 26 is supported by the frame 2 via the lower lamp-supporting portion 71 of the front stay 56 extending forward from the head pipe 3. Either one of the lower supported portion 69 of the headlamp 26 and the lower lamp-supporting portion 71 of the front stay 56 is the support hole 72, and the other one of the lower supported portion 69 of the headlamp 26 and the lower lamp-supporting portion 71 of the front stay 56 is the support shaft 73. Therefore, it is possible to connect the lower supported portion 69 of the headlamp 26 and the lower lamp-supporting portion 71 of the front stay 56 together without using a bolt and a nut merely by inserting the support shaft 73 into the support hole 72. This makes it possible to downsize a structure to connect the lower supported portion 69 of the headlamp 26 and the lower lamp-supporting portion 71 of the front stay 56 with each other.

As described above, the fork pipe 46 and the steering shaft 40 extend obliquely rearward and upward. A space in front of the front fork 12 becomes narrower in the front-rear direction as the lower end portion of the fork pipe 46 is approached. In other words, the front cover 20 is liable to be enlarged in the front-rear direction if a connection structure in which the lower supported portion 69 of the headlamp 26 and the lower lamp-supporting portion 71 of the front stay 56 are connected together is enlarged in the front-rear direction. Therefore, it is possible to prevent the front cover 20 from being enlarged by reducing the connection structure in size.

In the present preferred embodiment, an LED light source smaller in size than an electric bulb is used as at least either one of the low-beam light source 81 and the high-beam light source 80. This makes it possible to make the headlamp 26 even smaller in size and to prevent the front cover 20 from being enlarged.

### Other Preferred Embodiments

Although preferred embodiments have been described above, various modifications of the embodiments are possible.

For example, at least one among the high beam lamp 60, the low beam lamp 61, and the position lamp may be a lamp separated from the other lamps.

The outer low-beam light source 81o may be disposed at a lower position than the inner low-beam light source 81i, or may be disposed at a height equal to the height of the inner low-beam light source 81i.

If the outer low-beam light source 81o is disposed at a height equal to the height of the inner low-beam light source 81i, the high-beam light source 80 may be disposed at a height equal to the height of the inner low-beam light source 81 i.

The high-beam light source 80 may be disposed at a more forward position than the inner low-beam light source 81i, or may be disposed at a position in which the high-beam light source 80 overlaps with the inner low-beam light source 81i in a side view.

The headlamp 26 may include four or more supported portions, and the number of the lower supported portions 69 may be equal to or exceeds the number of the upper supported portions 68.

At least one among the high-beam light source 80, the low-beam light source 81, and the position light source 82 may be an electric bulb, not an LED.

As shown in FIG. 18, the front end 20a of the front cover 20 may be disposed at a more rearward position than the rotational center Cr of the front wheel Wf in a side view.

According to this arrangement, the front end 20a of the front cover 20 is brought close to the head pipe 3. In other words, the front end 20a of the front cover 20 is disposed at a more rearward position than the rotational center Cr of the front wheel Wf in a side view. The front end 20a of the front cover 20 is close to the head pipe 3, and therefore a member supported by the front fork 12 also becomes close to the head pipe 3. It is possible for the rider to pivot the steering handle 11 rightward and leftward with a smaller force because the member supported by the front fork 12 is close to the head pipe 3.

When the seat 17 is located at the closed position, the oil filler opening 18a of the fuel tank 18 may be disposed below the seat 17, or may be disposed behind the seat 17.

## Claims

1. A scooter (1) comprising:
a front wheel (Wf);
a front fork (12) that supports the front wheel (Wf);
a frame (2) that includes a head pipe (3) supporting the front fork (12) so as to be turnable rightward and leftward between a rightward maximum steering position and a leftward maximum steering position;
a headlamp (26) that emits light forward; and
a front cover (20) that houses an upper portion of the front fork (12) and the headlamp (26); wherein
the front fork (12) includes:
a pair of fork pipes (46) that extend obliquely forward and downward and that are disposed on a right side and on a left side of a vehicle center (WO), respectively;
a steering shaft (40) that extends obliquely forward and downward and that is inserted in the head pipe (3);
a top bracket (41) connected to the pair of fork pipes (46) and to the steering shaft (40); and
an under bracket (44) that is disposed at a lower position than the top bracket (41) and that is connected to the pair of fork pipes (46) and to the steering shaft (40), **characterized in that** the headlamp (26) includes:
a high-beam light source (80) disposed at the vehicle center (WO); and
a plurality of low-beam light sources (81) including two or more light sources (81) disposed on the right side of the vehicle center (WO) and two or more light sources (81) disposed on the left side of the vehicle center (WO), the plurality of low-beam light sources (81) differing from the high-beam light source (80);
the plurality of low-beam light sources (81) includes a pair of outer low-beam light sources (81o) disposed on the right side and on the left side of the vehicle center (WO), respectively;
each outer low-beam light source (81o) of the pair of outer low-beam light sources (81o) is disposed at a more outward position in a vehicle width direction than the plurality of low-beam light sources (81) excluding the pair of outer low-beam light sources (81o) and is disposed at a more rearward position than the plurality of low-beam light sources (81) excluding the pair of outer low-beam light sources (81o),
when the front fork (12) is disposed at the rightward maximum steering position or at the leftward maximum steering position, the fork pipe (46) on the left side or the fork pipe (46) on the right side is disposed between an inner low-beam light source (81i), which is disposed at a most inward position in the vehicle width direction among the plurality of low-beam light sources (81), and the high-beam light source (80) in the vehicle width direction, and
a front end (20a) of the front cover (20) is disposed at a more rearward position than a front end (46a) of each fork pipe (46) in a side view of the scooter (1).

2. The scooter (1) according to Claim 1, **characterized in that** each outer low-beam light source (81o) of the pair of outer low-beam light sources (81o) is disposed at a higher position than the plurality of low-beam light sources (81) excluding the pair of outer low-beam light sources (81o).

3. The scooter (1) according to Claim 1 or Claim 2, **characterized in that** the high-beam light source (80) is disposed at a height differing from a height of at least one of the plurality of low-beam light sources (81).

4. The scooter (1) according to any one of Claim 1 to Claim 3, **characterized in that** the plurality of low-beam light sources (81) include a front low-beam light source (81i) disposed at a most forward position among the plurality of low-beam light sources (81), and
the high-beam light source (80) is disposed at a more rearward position than the front low-beam light source (81i).

5. The scooter (1) according to any one of Claim 1 to Claim 4, **characterized in that** the headlamp (26) further includes:
a right-and-left pair of upper supported portions (68) supported by the frame (2); and
a lower supported portion (69) that is disposed at a lower position than the pair of upper supported portions (68) and that is supported by the frame (2).

6. The scooter (1) according to Claim 5, the scooter (1) is **characterized by** a front stay (56) that extends forward from the head pipe (3), wherein
the front stay (56) includes a lower lamp-supporting portion (71) that supports the lower supported portion (69) of the headlamp (26),
either one of the lower supported portion (69) and the lower lamp-supporting portion (71) includes a support hole (72), and
a remaining one of the lower supported portion (69) and the lower lamp-supporting portion (71) includes a support shaft (73) inserted in the support hole (72).

7. The scooter (1) according to any one of Claim 1 to Claim 6, **characterized in that** at least one of the plurality of low-beam light sources (81) and the high-beam light source (80) is an LED light source.

8. The scooter (1) according to any one of Claim 1 to Claim 7, **characterized in that** the front end (20a) of the front cover (20) is disposed at a more rearward position than a rotational center (Cr) of the front wheel (Wf) in a side view of the scooter (1).

## Patentansprüche

1. Ein Roller (1), der umfasst:
Ein Vorder-Rad (Wf);
eine Vorder-Gabel (12), die das Vorder-Rad (Wf) lagert;
einen Rahmen (2), der ein Kopf-Rohr (3) beinhaltet, das die Vorder-Gabel (12) lagert, so dass diese nach rechts und nach links zwischen einer rechts gerichteten Maximal-Lenk-Position und einer links gerichteten Maximal-Lenk-Position drehbar ist;
einen Scheinwerfer (26), der Licht nach vorne emittiert; und
eine Vorder-Abdeckung (20), die einen oberen Abschnitt der Vorder-Gabel (12) und des Scheinwerfers (26) aufnimmt; wobei
die Vorder-Gabel (12) beinhaltet:
ein Paar von Gabel-Rohren (46), die sich jeweils schräg nach vorne und unten erstrecken und die jeweils an einer rechten Seite und an einer linken Seite von der Fahrzeug-Mitte (WO) positioniert sind;
eine Lenk-Welle (40), die sich schräg nach vorne und unten erstreckt und die in das Kopf-Rohr (3) eingesetzt ist;
eine Oben-Klammer (41), die mit dem Paar von Gabel-Rohren (46) und der Lenk-Welle (40) verbunden ist; und
eine Unten-Klammer (44), die an einer niedrigeren Position als die Oben-Klammer (41) positioniert ist, und die mit dem Paar von Gabel-Rohren (46) und der Lenk-Welle (40) verbunden ist, **dadurch gekennzeichnet, dass** der Scheinwerfer (26) beinhaltet:
eine Aufblend-Licht-Quelle (80), die an der Fahrzeug-Mitte (WO) positioniert ist; und
eine Mehrzahl von Abblend-Licht-Quellen (81), die zwei oder mehr Licht-Quellen (81) beinhalten, die an der rechten Seite von der Fahrzeug-Mitte (WO) positioniert sind,
und zwei oder mehr Licht-Quellen (81), die an der linken Seite von der Fahrzeug-Mitte (WO) positioniert sind, die Mehrzahl von Abblend-Licht-Quellen (81) unterscheiden sich von der Aufblend-Licht-Quelle (80);
die Mehrzahl von Abblend-Licht-Quellen (81) beinhaltet ein Paar von Außen-Abblend-Licht-Quellen (81o), die jeweils an der rechten Seite und an der linken Seite von der Fahrzeug-Mitte (WO) positioniert sind;
jede Außen-Abblend-Licht-Quelle (81o) von dem Paar von Außen-Abblend-Licht-Quellen (81o) ist an einer weiter außen liegenden Position, in der Fahrzeug-Breiten-Richtung, positioniert als die Mehrzahl von Abblend-Licht-Quellen (81), außer dem Paar von Außen-Abblend-Licht-Quellen (81o), und ist an einer weiter hinten liegenden Position positioniert als die Mehrzahl von Abblend-Licht-Quellen (81), außer dem Paar von Außen-Abblend-Licht-Quellen (81o),
wenn die Vorder-Gabel (12) in der rechts gerichteten Maximal-Lenk-Position oder der links gerichteten Maximal-Lenk-Position positioniert ist, ist das Gabel-Rohr (46) an der linken Seite oder das Gabel-Rohr (46) an der rechten Seite zwischen einer Innen-Abblend-Licht-Quelle (81i), die an einer am weitesten innen liegenden Position in der Fahrzeug-Breiten-Richtung, von der Mehrzahl von Abblend-Licht-Quellen (81) positioniert ist, und der Aufblend-Licht-Quelle (80) positioniert, in der Fahrzeug-Breiten-Richtung, und
ein Vorder-Ende (20a) der Vorder-Abdeckung (20) ist an einer weiter hinten liegenden Position als ein Vorder-Ende (46a) von jedem Gabel-Rohr (46) positioniert, in einer Seiten-Ansicht des Rollers (1).

2. Der Roller (1) gemäß Anspruch 1, **dadurch gekennzeichnet, dass** jede Außen-Abblend-Licht-Quelle (81o) von dem Paar von Außen-Abblend-Licht-Quellen (81o) an einer höheren Position positioniert ist als die Mehrzahl von Abblend-Licht-Quellen (81), außer dem Paar von Außen-Abblend-Licht-Quellen (81o).

3. Der Roller (1) gemäß Anspruch 1 oder Anspruch 2, **dadurch gekennzeichnet, dass** die Aufblend-Licht-Quelle (80) an einer Höhe, unterschiedlich von einer Höhe von zumindest einem von der Mehrzahl von Abblend-Licht-Quellen (81), positioniert ist.

4. Der Roller (1) gemäß zu irgendeinem von Anspruch 1 bis Anspruch 3, **dadurch gekennzeichnet, dass** die Mehrzahl von Abblend-Licht-Quellen (81) eine Vorder-Abblend-Licht-Quelle (81i) beinhalten, die an einer am weitesten vorne liegenden Position von der Mehrzahl der Abblend-Licht-Quellen (81) positioniert ist, und die Aufblend-Licht-Quelle (80) ist an einer weiter hinten liegenden Position als die Vorder-Abblend-Licht-Quelle (81i) positioniert.

5. Der Roller (1) gemäß zu irgendeinem von Anspruch 1 bis Anspruch 4, **dadurch gekennzeichnet, dass** der Scheinwerfer (26) weiter beinhaltet:
ein Rechts-und-Links-Paar von oberen gelagerten Abschnitten (68), die durch den Rahmen (2) gelagert sind; und
einen unteren gelagerten Abschnitt (69), der an einer niedrigeren Position positioniert ist als das Paar von oberen gelagerten Abschnitten (68), und der durch den Rahmen (2) gelagert ist.

6. Der Roller (1) gemäß Anspruch 5, der Roller (1) ist **gekennzeichnet, durch** eine Vorder-Stütze (56), die sich nach vorne von dem Kopf-Rohr (3) erstreckt, wobei die Vorder-Stütze (56) einen unteren Lampen-Lager-Abschnitt (71) beinhaltet, der den unteren gelagerten Abschnitt (69) des Scheinwerfers (26) lagert,
einer von dem unteren gelagerten Abschnitten (69) und dem unteren Lampen-Lager-Abschnitt (71) beinhaltet ein Lager-Loch (72), und ein verbleibender von dem unteren gelagerten Abschnitt (69) und dem unteren Lampen-Lager-Abschnitt (71) beinhaltet eine Lager-Welle (73), die in das Lager-Loch (72) eingesetzt ist.

7. Der Roller (1) gemäß zu irgendeinem von Anspruch 1 bis Anspruch 6, **dadurch gekennzeichnet, dass** zumindest eine von der Mehrzahl von Abblend-Licht-Quellen (81) und der Aufblend-Licht-Quelle (80) eine LED-Licht-Quelle ist.

8. Der Roller (1) gemäß zu irgendeinem von Anspruch 1 bis Anspruch 7, **dadurch gekennzeichnet, dass** das Vorder-Ende (20a) der Vorder-Abdeckung (20) an einer weiter hinten liegenden Position positioniert ist als ein Dreh-Zentrum (Cr) des VorderRads (Wf) in einer Seiten-Ansicht des Rollers (1).

## Revendications

1. Scooter (1) comportant :
une roue avant (Wf) ;
une fourche avant (12) qui maintient la roue avant (Wf) ;
un châssis (2) qui comprend un tube frontal (3) maintenant la fourche avant (12) de manière à pouvoir tourner vers la droite et vers la gauche entre une position de direction maximale droite et une position de direction maximale gauche ;
un phare avant (26) qui émet de la lumière vers l'avant ; et
un capot avant (20) qui abrite une partie supérieure de la fourche avant (12) et du phare avant (26) ; où
la fourche avant (12) comprend :
une paire de tubes de fourche (46) qui s'étendent obliquement vers l'avant et vers le bas et qui sont respectivement disposés sur un côté droit et un côté gauche d'un centre du véhicule (WO) ;
une colonne de direction (40) qui s'étend obliquement vers l'avant et vers le bas et qui est insérée dans le tube frontal (3) ;
un té de fourche supérieur (41) raccordé à la paire de tubes de fourche (46) et à l'arbre de direction (40) ; et
un té de fourche inférieur (44) qui est disposé en une position plus basse que le té de fourche supérieur (41) et qui est raccordé à la paire de tubes de fourche (46) et à l'arbre de direction (40) ;
**caractérisé en ce que** le phare (46) comporte :
une source de lumière de feux de route (80) disposée au centre du véhicule (WO) ; et
une pluralité de sources de lumière de feux de croisement (81) comprenant deux ou plusieurs sources de lumière (81) disposées sur le côté droit du centre du véhicule (WO) et deux ou plusieurs sources de lumière (81) disposées sur le côté gauche du centre du véhicule (WO), la pluralité de sources de lumière de feux de croisement (81) étant séparée de la source de lumière de feux de route (80) ;
la pluralité de sources de lumière de feux de croisement (81) comprend une paire de sources de lumière de feux de croisement extérieure (81o) disposées respectivement sur le côté droit et sur le côté gauche du centre du véhicule (WO) ;
chaque source de lumière de feux de croisement extérieure (81o) de la paire de sources de lumière de feux de croisement extérieure (81o) est disposée en une position plus extérieure dans la direction de la largeur du véhicule que la pluralité de sources de lumière de feux de croisement (81) à l'exception de la paire de sources de lumière de feux de croisement extérieure (81o) et est disposée en une position plus en arrière que la pluralité de sources de lumière de feux de croisement (81) à l'exception de la paire de sources de lumière de feux de croisement extérieures (81o),
quand la fourche avant (12) est disposée dans la position de direction maximale droite ou dans la position de direction maximale gauche, le tube de fourche (46) côté gauche ou le tube de fourche (46) côté droit est disposé entre une source de lumière de feux de croisement intérieure (81i), qui est disposée dans la position la plus intérieure dans la direction de la largeur du véhicule parmi la pluralité de sources de lumière de feux de croisement (81), et la source de lumière de feux de route (80) dans la direction de la largeur du véhicule, et
une extrémité avant (20a) du capot avant (20) est disposée en une position plus arrière qu'une extrémité avant (46a) de chaque tube de fourche (46) dans une vue latérale du scooter (1).

2. Scooter (1) selon la revendication 1, **caractérisé en ce que** chaque source de lumière de feux de croisement extérieure (81o) de la paire de sources de lumière de feux de croisement extérieures (81o) est disposée en une position plus élevée que la pluralité de sources de lumière de feux de croisement (81) à l'exception de la paire de sources de lumière de feux de croisement extérieures (81o).

3. Scooter (1) selon la revendication 1 ou la revendication 2, **caractérisé en ce que** la source de lumière de feux de route (80) est disposée à une hauteur différente d'une hauteur d'au moins une de la pluralité de sources de lumière de feux de croisement (81).

4. Scooter (1) selon l'une quelconque des revendications 1 à 3, **caractérisé en ce que** la pluralité de sources de lumière de feux de croisement (81) comprend une source de lumière de feux de croisement avant (81i) disposée à la position la plus avancée parmi la pluralité de sources de lumière de feux de croisement (81), et
la source de lumière de feux de route (80) est disposée en une position plus arrière que la source de lumière de feux de croisement avant (81i).

5. Scooter (1) selon l'une quelconque des revendications 1 à 4, **caractérisé en ce que** le phare (26) comprend en outre :
une paire droite/gauche de parties supportées supérieures (68) supportées par le châssis (2) ; et
une partie supportée inférieure (69) qui est disposée en une position plus basse que la paire de parties supportées supérieures (68) et qui est supportée par le châssis (2).

6. Scooter (1) selon la revendication 5, le scooter (1) étant **caractérisé par** une potence avant (56) qui s'étend vers l'avant à partir du tube frontal (3), où
la potence avant (56) comprend une partie de support de phare inférieure (71) qui supporte la partie supportée inférieure (69) du phare (26),
l'une des parties que sont la partie supportée inférieure (69) et la partie de support de phare inférieure (71) comprend un trou de support (72), et
l'autre des parties que sont la partie supportée inférieure (69) et la partie de support de phare inférieure (71) comprend une tige de support (73) insérée dans le trou de support (72).

7. Scooter (1) selon l'une quelconque des revendications 1 à 6, **caractérisé en ce que** au moins une des sources de lumière parmi la pluralité de sources de lumière de feux de croisement (81) et la source de lumière de feux de route (80) est une source de lumière LED.

8. Scooter (1) selon l'une quelconque des revendications 1 à 7, **caractérisé en ce que** l'extrémité avant (20a) du capot avant (20) est disposée en un emplacement plus arrière qu'un centre de rotation (Cr) de la roue avant (Wf) dans une vue latérale du scooter (1).
